# EUROPÄISCHE PATENTSCHRIFT

(11) **EP 1 245 199 B1**
(45) Veröffentlichungstag und Bekanntmachung des Hinweises auf die Patenterteilung: **18.08.2004**
(21) Anmeldenummer: 02006383.0
(22) Anmeldetag: 21.03.2002
(51) Int. Cl.: A61C 19/00, B08B 9/02, G01F 11/02, B05B 11/00, A61C 1/00

(54) **Dosiergerät für Pflegemittel**
Metering device for care product
Appareil de dosage pour produit de soins

(30) Priorität: 26.03.2001 DE 10114771
(43) Veröffentlichungstag der Anmeldung: 02.10.2002
(73) Patentinhaber: Kaltenbach & Voigt GmbH & Co. KG, 88400 Biberach/Riss (DE)
(72) Erfinder: Grimm, Michael, 89597 Munderkingen (DE); Baur, Helmut, 88454 Unteressendorf (DE)
(74) Vertreter: Schmidt-Evers, Jürgen, Dipl.-Ing.

(56) Entgegenhaltungen:
- WO-A-00/61032
- DE-A- 3 934 740
- GB-A- 807 145
- NL-C- 1 011 477
- US-A- 3 760 986
- US-A- 4 294 293

## Beschreibung

Die vorliegende Erfindung betrifft ein Dosiergerät für ein flüssiges Pflegemittel zur Pflege des Saugsystems und Abflußsystems eines zahnärztlichen Behandlungsplatzes.

Bei zahnärztlichen oder medizinischen Behandlungen werden oftmals Spraynebel, Sekret, Blut und Festteile abgesaugt. Aus Gründen der Hygiene ist es dabei nach Behandlungsschluß notwendig, die mit Schmutz und Keimen belasteten Systeme, insbesondere die Saugschläuche der Saugsysteme zu reinigen und zu dekontaminieren. Hierfür werden von verschiedenen Anbietern Pflegesysteme zur Verfügung gestellt, bei denen zunächst aus einem Pflegemittelkonzentrat und Wasser eine Gebrauchslösung angemischt wird. Das Konzentrat kann dabei ein Pulver, ein Gel oder eine niederviskose Flüssigkeit sein. Die Behälter, in denen das Pflegemittel angemischt wird, enthalten Aufsteckvorrichtungen für die jeweiligen Saugschläuche, über die die Pflegeflüssigkeit abgesaugt und das Saugsystem hierdurch gereinigt werden kann.

Aus der DE 40 10 615 C2 ist ein weiteres Verfahren zur Pflege von ärztlichen oder zahnärztlichen Absaugeinrichtungen bekannt, bei denen das Pflegemittel in Form von Granulatkörnchen bereitgestellt wird. Diese Granulatkörnchen werden direkt durch die zu reinigenden Saugschläuche abgesaugt, wobei sie bei Kontakt mit der benetzten Innenoberfläche des Saugsystems bzw. Abflußsystems haften bleiben und sich in dem die Benetzung bildenden Wasserfilm langsam auflösen. Hierdurch verbreitet sich das Pflegemittel innerhalb des Saugsystems, so daß schließlich ein wesentlicher Teil der Oberflächen mit einem hochkonzentrierten Pflegemittel bedeckt ist, welches für die gewünschte intensive Desinfektion sorgt.

Die vorliegende Erfindung basiert auf einem Pflegemittel-Dosiergerät, wie es beispielsweise aus der US 3,760,986 bekannt ist. In Fig. 4 dieses US-Patents ist ein Dosiergerät dargestellt, welches zunächst einen Vorratsbehälter aufweist, in dem ein flüssiges Pflegemittel angeordnet ist. Darüber hinaus ist ein Entnahmebehälter vorgesehen, der mit dem Vorratsbehälter über eine Pumpe verbunden ist, die bei einer entsprechenden Betätigung das flüssige Pflegemittel in den Entnahmebehälter pumpt. Aus dem Entnahmebehälter kann dann das Pflegemittel entnommen werden. Da bei jeder Betätigung der Pumpe eine vorgegebene Menge des Pflegemittels in den Entnahmebehälter gepumpt wird, erlaubt dieses Dosiergerät eine genaue Dosierung des Pflegemittels.

Der vorliegenden Erfmdung liegt die Aufgabe zugrunde, dieses bekannte Dosiergerät derart weiterzubilden, daß es sich besonders gut für die Pflege und Reinigung des Saugsystems und Abflußsystems eines zahnärztlichen Behandlungsplatzes eignet.

Diese Aufgabe wird durch ein Dosiergerät gelöst, welches die Merkmale des Anspruches 1 aufweist.

Das Dosiergerät der vorliegenden Erfindung weist zunächst ebenso wie das bekannte Dosiergerät einen Vorratsbehälter, in dem ein flüssiges Pflegemittel angeordnet ist, sowie einen Entnahmebehälter auf, der mit dem Vorratsbehälter über eine Pumpe verbunden ist. Wie oben beschrieben ist, pumpt die Pumpe bei einer entsprechenden Betätigung das flüssige Pflegemittel in den Entnahmebehälter. Erfindungsgemäß ist an dem Entnahmebehälter zumindest ein Absaugrohr angeordnet, an das ein zu reinigender Schlauch des Saugsystems anschließbar ist.

Das erfindungsgemäße Dosiergerät ermöglicht es insbesondere, die in den Entnahmebehälter gepumpte Menge des Pflegemittels unmittelbar einem zu reinigenden Saugsystems zuzuführen.

Darüber hinaus gestattet es das erfindungsgemäße Dosiergerät, das in dem Vorratsbehälter befindliche Pflegemittel direkt zu verwenden, ohne daß zuvor aus einem Konzentrat und Wasser ein Pflegemittel in der gewünschten Konzentration angemischt werden muß. Ferner wird durch die Pumpe eine genaue Dosierung ermöglicht, so daß jeweils nur die Menge an Pflegemittel in den Entnahmebehälter befördert wird, die zur Reinigung des entsprechenden Schlauchs oder Abflusses auch benötigt wird.

Weiterbildungen der Erfindung sind Gegenstand der Unteransprüche.

So handelt es sich bei der Pumpe vorzugsweise um eine Kolbenpumpe, wie sie zur Förderung von flüssigen bis pastösen Medien zum Einsatz kommt. Dabei kann der Entnahmebehälter mit dem Kolben der Pumpe starr verbunden sein, so daß zu einer Betätigung der Pumpe einfach der Entnahmebehälter herabzudrücken ist. Je nachdem, wie weit der Entnahmebehälter herabgedrückt wird, wird dann die entsprechende Pflegemittelmenge in den Entnahmebehälter gepumpt.

Der Vorratsbehälter kann auch mehrere Absaugrohre unterschiedlicher Größe aufweisen, an die die zu reinigenden Schläuche des Saugsystems angeschlossen werden können. In diesem Fall sind die Saugrohre vorzugsweise koaxial angeordnet. Ferner kann vorgesehen sein, daß der Entnahmebehälter eine Ausgießtülle aufweist. Hierdurch kann das in den Entnahmebehälter gepumpte Pflegemittel auch einfach in das zu reinigende Abflußsystem gegossen werden.

Im folgenden soll die Erfindung anhand der beiliegenden Zeichnungen näher erläutert werden. Es zeigen:
- Fig. 1: das erfindungsgemäße Dosiergerät im Schnitt;
- Fig. 2-8: das in Fig. 1 dargestellte Dosiergerät in verschiedenen Phasen des Dosiervorgangs; und
- Fig. 9: einen zahnärztlichen Behandlungsplatz, dessen Saug- und Abflußsystem mit Hilfe des erfindungsgemäßen Dosiergeräts gereinigt werden soll.

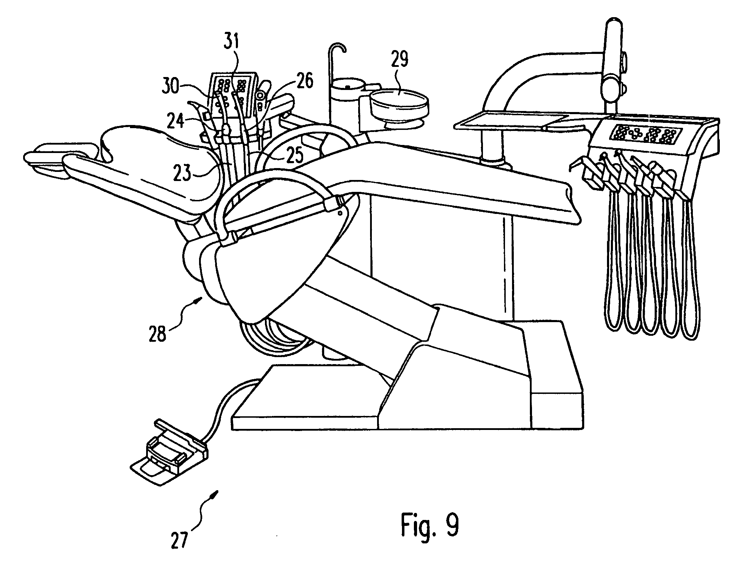

Das erfindungsgemäße Dosiergerät ist insbesondere zur Pflege des Saug- und Abflußsystems eines in Figur 9 schematisch dargestellten zahnärztlichen Behandlungsplatzes 27 vorgesehen, der einen Dentalstuhl 28 sowie entsprechende zahnärztliche Behandlungsgeräte aufweist. Zu reinigen sind dabei insbesondere das Speibecken 29 sowie das Abflußsystem, welches durch die Absaugschläuche 23 und 25 des Spraynebelschlauchhandstücks 30 bzw. des Speichelzieherschlauchhandstücks 31 gebildet wird.

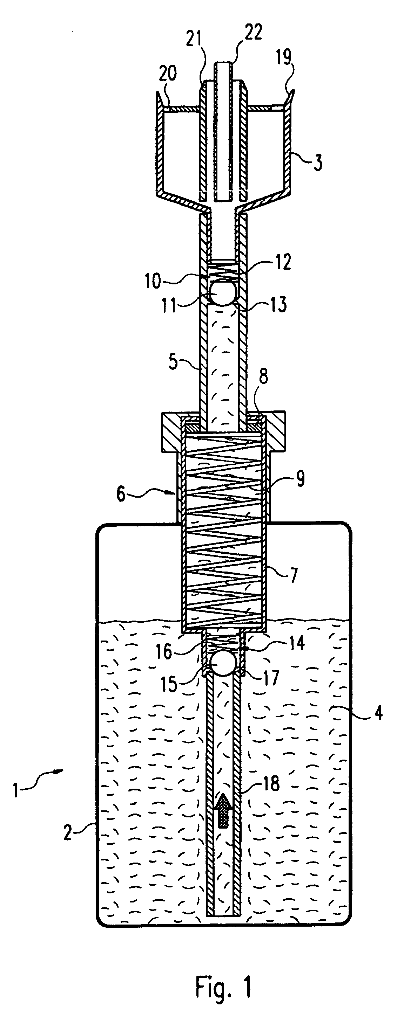

Das hierzu vorgesehene und in Figur 1 dargestellte Dosiergerät 1 besteht im wesentlichen aus zwei Teilen, einem unteren Teil, der durch einen Vorratsbehälter 2 gebildet wird, und einem oberen Teil, der durch einen Entnahmebehälter 3 gebildet wird. Der Vorratsbehälter 2 dient dabei zur Aufnahme einer großen Menge des Pflegemittels 4, bei dem es sich um eine Flüssigkeit - vorzugsweise mit mittelviskosen Eigenschaften - oder um ein Gel handelt.

Der Vorratsbehälter 2 und der Entnahmebehälter 3 sind über eine Hand-Dosierpumpe 6 in Form einer Kolbenpumpe, wie sie zur Förderung von flüssigen bis pastösen Medien zum Einsatz kommt, verbunden. Innerhalb des Pumpengehäuses 7 ist ein Kolben 8 bewegbar angeordnet, der durch eine Rückstellfeder 9 nach oben vorgespannt ist. Der obere Ausgang des Pumpengehäuses 7 ist über eine Verbindungsleitung 5 in Form eines starren Rohres mit dem Entnahmebehälter 3 verbunden. Innerhalb des Verbindungsrohres 5 ist ein oberes Rückschlagventil 10 angeordnet, welches durch eine über eine Feder 12 gegen einen Anschlag 13 entgegen der Förderrichtung der Pumpe 6 nach unten vorgespannte Kugel 11 gebildet wird.

Ein weiteres unteres Rückschlagventil 14, welches in gleicher Weise wie das obere Rückschlagventil 10 aufgebaut ist, ist am Eingang des Pumpengehäuses 7 angeordnet und dient zum Öffnen oder Sperren eines in den Vorratsbehälter 1 ragenden Ansaugrohres 18.

Innerhalb des Entnahmebehälters 3 sind zwei Absaugrohre 21 und 22 angeordnet, welche einen derartigen Durchmesser aufweisen, daß sie mit den zu reinigenden Schläuchen des Absaugsystems gekoppelt werden können. Auf diese Weise kann zur Reinigung eines Schlauchs das innerhalb des Entnahmebehälters 3 angeordnete Pflegemittel abgesaugt werden. Darüber hinaus weist der Entnahmebehälter 3 an einer Seite eine Ausgießtülle 19 auf, durch die beispielsweise das in dem Entnahmebehälter 3 befindliche Pflegemittel zur Reinigung des Speibeckens ausgegossen werden kann. Schließlich ist an der Oberseite des Entnahmebehälters 3 eine Nebenluftbohrung 20 vorgesehen.

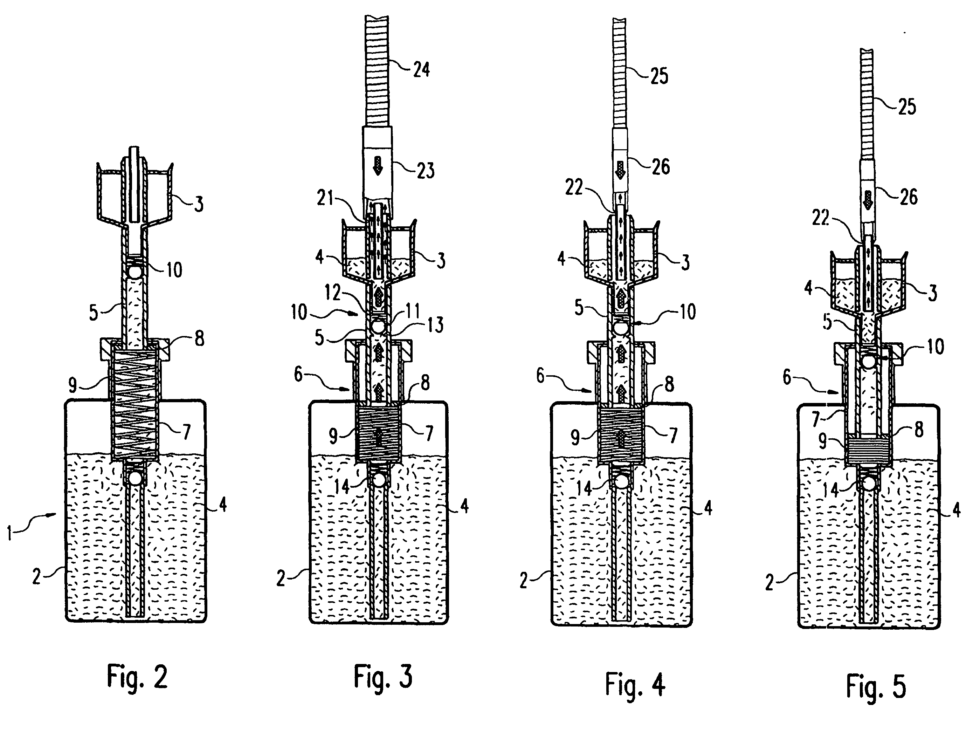

Bezug nehmend auf die Figuren 2-8 soll nunmehr die Funktionsweise der Pumpe 6 sowie des gesamten Dosiergeräts 1 erläutert werden. Die verschiedenen Figuren zeigen dabei die einzelnen Phasen eines Dosiervorgangs.

Figur 2 zeigt die Ausgangsstellung des Dosiergeräts 1 vor einem Dosiervorgang. In dieser Ausgangsstellung wird der Kolben 8 durch die Rückstellfeder 9 bis an seine obere Endposition innerhalb des Pumpengehäuses 7 nach oben gedrückt. Das Pumpengehäuse 7 ist dabei vollständig mit dem Pflegemittel 4 gefüllt. Ferner ist auch das Ansaugrohr 18 sowie das Verbindungsrohr 5 von der Oberseite des Pumpengehäuses 7 bis zu dem oberen Rückschlagventil 10 mit dem Pflegemittel 4 gefüllt.

Soll beispielsweise - wie in Figur 3 dargestellt - der Schlauch 23 des Spraynebelschlauchhandstücks gereinigt werden, so wird dieser über sein Kupplungsstück 24 mit dem Absaugrohr 21 des Entnahmebehälters 3 verbunden. Anschließend wird der Entnahmebehälter gemeinsam mit dem Pumpenkolben 8 gegen die Kraft der Vorspannfeder 9 herabgedrückt, was beispielsweise durch ein Herabdrücken des Kupplungsstücks 24 erfolgen kann.

Durch das Herabdrücken des Kolbens 8 wird das Volumen des Kolbenraumes reduziert, so daß das darin angeordnete Pflegemittel 4 nach oben in Richtung des Entnahmebehälters 3 strömt. Dabei wird die Kugel 11 des oberen Rückschlagventils 10 nach oben gedrückt, so daß das Ventil 10 automatisch öffnet. Das in den Entnahmebehälter 3 einströmende Pflegemittel 4 wird dann durch den Schlauch 23 abgesaugt, so daß dieser gereinigt wird. Das untere Rückschlagventil 14 bleibt während dieses Vorgangs geschlossen. Figur 4 zeigt den gleichen Schritt bei einer Reinigung des Schlauches 25 des Speichelzieherschlauchhandstücks. Hier wird der dünnere Schlauch 25 über sein Kupplungsstück 26 mit dem inneren Absaugrohr 22 verbunden.

Wieviel Pflegemittel 4 in den Vorratsbehälter 3 gefördert wird, hängt von der Höhe des Kolbenhubs ab. Damit besteht die Möglichkeit, die Menge des Pflegemittels 4 exakt zu dosieren, indem der Kolben 8 genau um die der gewünschten Menge entsprechende Höhe herabgedrückt wird. Beispielsweise könnte hierfür an der Außenseite eine Skala angebracht werden, welche den benötigten Kolbenhub zum Fördern bestimmten Pflegemittelmenge anzeigt.

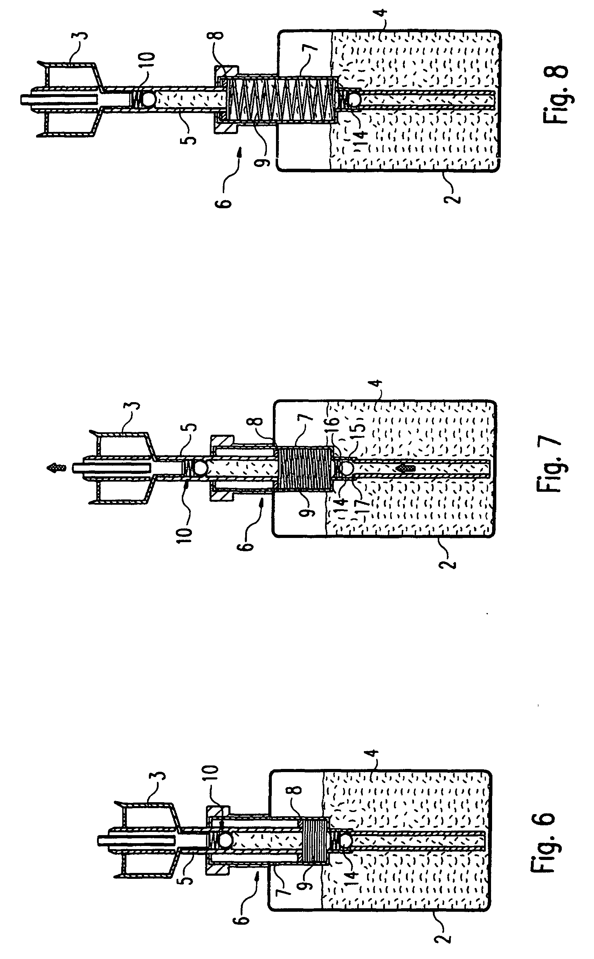

Die für einen Dosiervorgang maximale Pflegemittelmenge kann dann in den Entnahmebehälter 3 gefördert werden, wenn der Kolben 8 vollständig herabgedrückt wird. Wurde der Kolben 8 um die gewünschte Höhe oder vollständig herabgedrückt, schließt - wie in Figur 5 dargestellt - das obere Rückschlagventil 10 automatisch, so daß trotz der Saugkraft des zu reinigenden Schlauches 25 kein weiteres Pflegemittel mehr aus dem Kolbenraum 7 bzw. dem Vorratsbehälter 4 abgesaugt werden kann. Wie in Figur 6 dargestellt ist, wird das Pflegemittel 4 maximal bis zu dem nunmehr geschlossenen oberen Rückschlagventil 10 abgesaugt. Das untere Rückschlagventil 14 ist in dieser Phase nach wie vor geschlossen.

Anstelle des oben beschriebenen Anschließen des Absaugschlauches und darauffolgenden Herabdrückens des Kolbens 8 zum Pumpen des Pflegemittels 4 kann alternativ auch zunächst der Entnahmebehälter 3 herabgedrückt werden, um eine gewünschte Pflegemittelmenge zu fördern. Dieses Pflegemittel 4 kann dann beispielsweise über die Ausgießtülle 19 ausgegossen werden um beispielsweise das Speibecken zu reinigen. Es besteht auch die Möglichkeit, erst nach dem Pumpen des Pflegemittels 4 in den Vorratsbehälter 3 das geförderte Pflegemittel 4 mit einem Absaugschlauch abzusaugen.

Nachdem der teilweise oder vollständig herabgedrückte Kolben 8 losgelassen wurde, wird er durch die Rückstellfeder 9 wieder automatisch nach oben gedrückt. Hierdurch entsteht innerhalb des Pumpenraumes 7 ein Unterdruck, so daß das untere Rückschlagventil 14 automatisch öffnet und das in dem Vorratsbehälter 2 befindliche Pflegemittel 4 über das Ansaugrohr 18 nach oben in den Pumpenraum 7 einströmt. Erst wenn der Kolben 8 vollständig nach oben gedrückt wurde und der Pumpenraum 7 mit dem Pflegemittel wieder gefüllt ist, schließt das untere Rückschlagventil 14 automatisch, so daß sich die in Figur 8 dargestellte Endstellung ergibt, die mit der in Figur 2 dargestellten Ausgangsstellung identisch ist.

Das dargestellte Dosiergerät ermöglicht somit auf einfache Weise ein genaues Dosieren des Pflegemittels, so daß exakt die zum Reinigen eines bestimmten Geräts benötigte Menge bereitgestellt werden kann. Ferner ist es nicht notwendig, zunächst mit Hilfe eines Konzentrats ein Pflegemittel in der gewünschten Konzentration anzumischen. Vielmehr kann das in dem Vorratsbehälter angeordnete Pflegemittel unmittelbar verwendet werden, so daß der Aufwand zum Reinigen eines Saug- und/oder Abflußsystems äußerst gering ist.

## Patentansprüche

1. Zahnärztliches Dosiergerät für ein flüssiges Pflegemittel (4) zur Pflege des Saugsystems (23, 25) und Abflußsystems (29) eines zahnärztlichen Behandlungsplatzes (27),
aufweisend einen Vorratsbehälter (2) sowie einen Entnahmebehälter (3), wobei der Entnahmebehälter (3) mit dem Vorratsbehälter (2) über eine Pumpe (6) verbunden ist, die dazu ausgebildet ist, bei ihrer Betätigung Pflegemittel (4) in den Entnahmebehälter (3) zu pumpen,
**dadurch gekennzeichnet,**
**daß** an dem Entnahmebehälter (3) zumindest ein Absaugrohr (21) angeordnet ist, an das ein zu reinigender Schlauch (23) des Saugsystems anschließbar ist.

2. Zahnärztliches Dosiergerät nach Anspruch 1,
**dadurch gekennzeichnet,**
**daß** die Pumpe (6) eine Kolbenpumpe ist.

3. Zahnärztliches Dosiergerät nach Anspruch 2,
**dadurch gekennzeichnet,**
**daß** der Kolben (8) der Pumpe (6) mit dem Entnahmebehälter (3) starr verbunden ist, wobei zur Betätigung der Pumpe (6) der mit dem Kolben (8) verbundene Entnahmebehälter (3) herabgedrückt werden kann.

4. Zahnärztliches Dosiergerät nach Anspruch 2 oder 3,
**dadurch gekennzeichnet,**
**daß** der Kolben (8) der Pumpe (6) durch eine Rückstellfeder (9) vorgespannt ist.

5. Zahnärztliches Dosiergerät nach einem der vorherigen Ansprüche,
**dadurch gekennzeichnet,**
**daß** in einer zwischen der Pumpe (6) und dem Entnahmebehälter (3) angeordneten Verbindungsleitung (5) ein Rückschlagventil (10) angeordnet ist, welches dazu ausgebildet ist, bei einer Betätigung der Pumpe (6) automatisch zu öffnen.

6. Zahnärztliches Dosiergerät nach einem der vorherigen Ansprüche,
**dadurch gekennzeichnet,**
**daß** in einem die Pumpe (6) mit dem Vorratsbehälter (2) verbindenden Ansaugrohr (18) ein weiteres Rückschlagventil (14) angeordnet ist.

7. Zahnärztliches Dosiergerät nach einem der vorherigen Ansprüche,
**dadurch gekennzeichnet,**
**daß** an dem Entnahmebehälter (3) ein weiteres Absaugrohr (22) angeordnet ist, an das ein zu reinigender Schlauch (24) des Saugsystems anschließbar ist, wobei die beiden Absaugrohre (21, 22) einen unterschiedlichen Durchmesser aufweisen.

8. Zahnärztliches Dosiergerät nach Anspruch 7,
**dadurch gekennzeichnet,**
**daß** die beiden Absaugrohre (21, 22) koaxial angeordnet sind.

9. Zahnärztliches Dosiergerät nach einem der vorherigen Ansprüche,
**dadurch gekennzeichnet,**
**daß** der Entnahmebehälter (3) eine Ausgießtülle (19) aufweist.

## Claims

1. Dental dispenser for a fluid cleaning medium (4) for cleaning the suction system (23, 25) and drainage system (29) of a dental treatment station (27),
having a supply container (2) and a dispensing container (3), the dispensing container (3) being connected with the supply container (2) via a pump (6) which is constituted for the purpose of, upon its actuation, pumping cleaning medium (4) into the dispensing container (3).
**characterized in that**,
at least one suction tube (21) is arranged on the dispensing container (3), to which suction tube a hose (23) of the suction system to be cleaned can be connected.

2. Dental dispenser according to claim 1,
**characterized in that**,
the pump (6) is a piston pump.

3. Dental dispenser according to claim 2,
**characterized in that**,
the piston (8) of the pump (6) is rigidly connected with the dispensing container (3), whereby for actuation of the pump (6) the dispensing container (3), connected with the piston (8), can be pressed down.

4. Dental dispenser according to claim 2 or 3,
**characterized in that**,
the piston (8) of the pump (6) is biased by means of a return spring (9).

5. Dental dispenser according to any preceding claim,
**characterized in that**,
a non-return valve (10) is arranged in a connection line (5) arranged between the pump (6) and the dispensing container (3), which non-return valve is constituted to automatically open upon an actuation of the pump (6).

6. Dental dispenser according to any preceding claim,
**characterized in that**,
a further non-return valve (14) is arranged in a suction tube (18) connecting the pump (6) with the supply container (2).

7. Dental dispenser according to any preceding claim,
**characterized in that**,
a further suction tube (22) is arranged on the dispensing container (3), to which further suction tube a hose (24) of the suction system to be cleaned can be connected, whereby the two suction tubes (21, 22) have a different diameter.

8. Dental dispenser according to claim 7,
**characterized in that**,
the two suction tubes (21, 22) are arranged coaxially.

9. Dental dispenser according to any preceding claim,
**characterized in that**,
the dispensing container (3) has a pouring spout (19).

## Revendications

1. Appareil de dosage dentaire d'un liquide d'entretien (4) destiné à l'entretien du système d'aspiration (23,25) et système d'évacuation (29) d'un poste de traitement dentaire (27),
présentant un récipient de stockage (2) et un récipient de prélèvement (3), dans lequel le récipient de stockage (2) est relié par une pompe, qui est conçue dans son actionnement pour pomper le moyen de soin (4) dans le récipient de prélèvement (3),
**caractérisé en ce que**,
sur le récipient de prélèvement (3) est agencé au moins un tuyau d'aspiration (21) auquel peut être raccordé un tuyau flexible (23) à nettoyer du système d'aspiration.

2. Appareil de dosage dentaire selon la revendication 1,
**caractérisé en ce que**,
la pompe (6) est une pompe à piston.

3. Appareil de dosage dentaire selon la revendication 2,
**caractérisé en ce que**,
le piston (8) de la pompe (6) est raccordé rigidement avec le récipient de prélèvement (3), dans lequel que pour l'actionnement de la pompe (6) le récipient de prélèvement (3) raccordé avec le piston (8) pourra être enfoncé.

4. Appareil de dosage dentaire selon la revendication 2 ou 3,
**caractérisé en ce que**,
le piston (8) de la pompe (6) est précontraint par un ressort de rappel (9).

5. Appareil de dosage dentaire selon l'une des revendications précédentes,
**caractérisé en ce que**,
dans une conduite de liaison (5) disposée entre la pompe (6) et le récipient de prélèvement (3) est agencée une soupape anti-retour (10) qui est conçue pour s'ouvrir automatiquement lors d'un actionnement de la pompe (6).

6. Appareil de dosage dentaire selon l'une des revendications précédentes,
**caractérisé en ce que**,
dans un tuyau d'aspiration (18) raccordant la pompe (6) avec le récipient de stockage (2) est disposée une autre soupape anti-retour (14).

7. Appareil de dosage dentaire selon l'une des revendications précédentes,
**caractérisé en ce que**,
sur le récipient de prélèvement (3) est disposé un tuyau d'aspiration supplémentaire (22) sur lequel peut être raccordé un tuyau flexible (24) à nettoyer du système d'aspiration, dans lequel les deux tuyaux d'aspiration (21,22) présentent un diamètre différent.

8. Appareil de dosage dentaire selon la revendication 7,
**caractérisé en ce que**,
les deux tuyaux d'aspiration (21,22) sont disposés coaxialement.

9. Appareil de dosage dentaire selon l'une des revendications précédentes,
**caractérisé en ce que**,
le récipient de prélèvement (3) présente un bec verseur (19).
